(19) Europäisches Patentamt
European Patent Office
Office européen des brevets

(11) EP 1 650 861 A1

(12) EUROPEAN PATENT APPLICATION
published in accordance with Art. 158(3) EPC

(43) Date of publication:
26.04.2006 Bulletin 2006/17

(51) Int Cl.:
H02P 6/06 (1995.01)

(21) Application number: 04747738.5

(22) Date of filing: 13.07.2004

(86) International application number:
PCT/JP2004/010274

(87) International publication number:
WO 2005/006533 (20.01.2005 Gazette 2005/03)

(84) Designated Contracting States:
ES GR IT

(30) Priority: 14.07.2003 JP 2003196399

(71) Applicant: MATSUSHITA ELECTRIC INDUSTRIAL
CO., LTD.
Kadoma-shi, Osaka 571-8501 (JP)

(72) Inventor: HARADA, Kazuhiro,
c/o Matsushita El. Ind. Co Ltd
Chuo-ku, Osaka 540-6319 (JP)

(74) Representative: Eisenführ, Speiser & Partner
Patentanwälte Rechtsanwälte
Postfach 10 60 78
28060 Bremen (DE)

(54) MOTOR DRIVE DEVICE

(57) An electric current detection means detects a phase current from an input current based upon information obtained from a duty correction means, which will be described later, and an induced voltage estimating means estimates an induced voltage based upon the phase current and the input voltage. A rotor positional speed detection means estimates the magnetic pole position and speed based upon the estimated induced voltage value. A phase-angle setting means sets a current phase angle of the electric motor based upon the magnetic pole position and a predetermined phase angle. A PWM signal generation means generates a PWM signal based upon the information of the current phase angle, and a duty correction means corrects duty of the signal. A first voltage saturation control means calculates a voltage saturation rate from the inverter input voltage and a voltage instruction value to be applied to the electric motor so that, when the voltage saturation rate is not less than a setting value A, a rotation-speed target value is reduced until the voltage saturation rate has become smaller than the setting value A. When the voltage saturation rate is not less than a setting value B (<A), a second voltage saturation control means gives an instruction for advancing the current phase angle to the phase angle setting means until the voltage saturation rate has become smaller than the setting value B.

Fig. 1

EP 1 650 861 A1

**Description**

FIELD OF THE INVENTION

The present invention relates to an electric motor driving device that drives an electric motor such as a brushless DC motor at a desired number of revolutions.

BACKGROUND OF THE INVENTION

In recent years, with respect to a device for driving an electric motor, such as a compressor in an air conditioning apparatus, there have been increasing demands for reducing power consumption from the viewpoint of protection of the earth environment. Under these circumstances, as one of power saving techniques, electric motors for compressors of a type in which a highly effective brushless DC motor is driven by using an inverter with a varying frequency have been widely adopted. Moreover, with respect to the driving technique, in contrast to a rectangular wave driving operation that carries out a driving process by using an electric current having a rectangular waveform, a sine wave driving technique, which is highly effective and capable of reducing noise, has drawn public attention..

In the case when a brushless DC motor is used for a compressor electric motor in an air conditioning apparatus, since it is difficult to attach a sensor used for detecting the rotor position of the motor thereto, a technique for a position sensor-less sine wave driving operation, which carries out a driving operation while estimating the position of the rotor by using a certain method, has been proposed. Here, with respect to the method for estimating the rotor position, a method in which an induced voltage of the motor is estimated has been described (for example, see Patent Document 1).

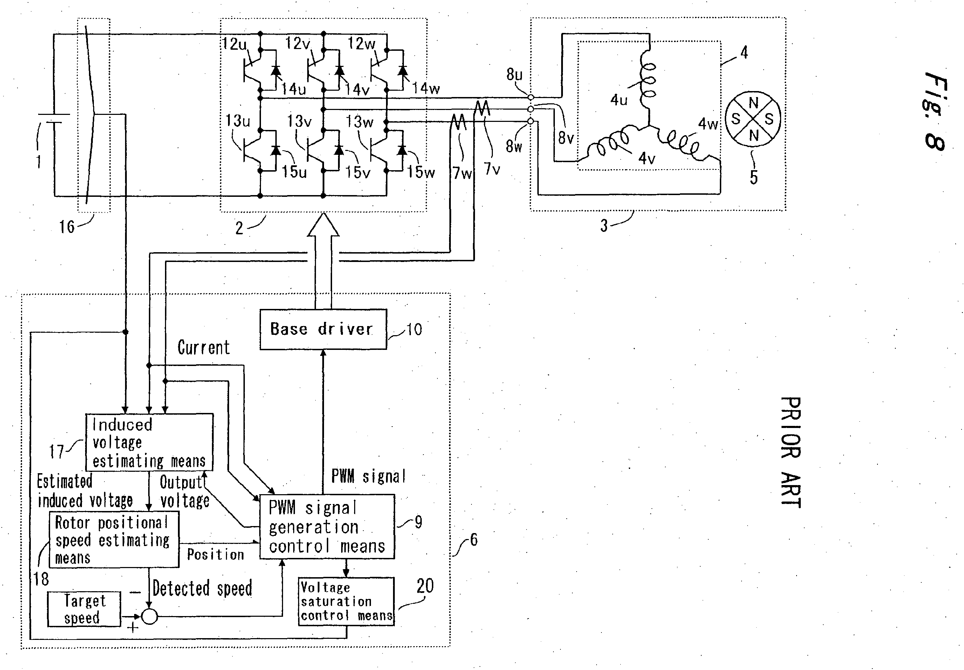

FIG. 8 shows a system structure used for achieving the position sensor-less sine wave driving operation.

Electric power inputted from a dc power supply 1 is inputted to a brushless motor 3 through an inverter 2. The brushless motor 3 has a stator 4 and a rotor 5 installed therein, and the inverter 2 is controlled by a control unit 6. In this case, an electric current directed into the brushless motor 3 is detected by current sensors 7v and 7w.

The brushless motor 3 is provided with a stator 4 to which three phase windings 4u, 4v and 4w, which are Y-connected centered on a neutral point, are attached, and a rotor 5 to which a magnet is attached. A U-phase terminal 8u is connected to a non-connection end of the U-phase winding 4u, a V-phase terminal 8v is connected to a non-connection end of the V-phase winding 4v, and a W-phase terminal 8w is connected to a non-connection end of the W-phase winding 4w.

The inverter 2 is provided with three series circuits, each having a pair of switching elements series-connected in association with the upstream side and the downstream side of electric current, which are used for U-phase, V-phase and W-phase. A dc voltage, outputted from the dc power supply 1, is applied to these series circuits. The series circuit for the U-phase is constituted by a switching element 12u on the upstream side and a switching element 13u on the downstream side. The series circuit for the V-phase is constituted by a switching element 12v on the upstream side and a switching element 13v on the downstream side. The series circuit for the W-phase is constituted by a switching element 12w on the upstream side and a switching element 13w on the downstream side. Here, freewheel diodes 14u, 14v, 14w, 15u, 15v, 15w are connected in parallel with the respective switching elements.

The terminals 8u, 8v and 8w of the brushless motor 3 are respectively connected to the mutual connection of the switching elements 12u and 13u, the mutual connection of the switching elements 12v and 13v and the mutual connection of the switching elements 12w and 13w in the inverter 2.

The control unit 6 detects currents flowing through the phase windings 4v and 4w of the brushless motor 3 by using current sensors 7v and 7w, estimates an induced voltage based upon these current values, allows a PWM signal generation means 9 to determine an output voltage so as to achieve a target velocity, and outputs a signal used for controlling the inverter 2.

Moreover, in order to prevent the voltage to be applied to the brushless motor 3 from being distorted from the sine wave and the subsequent increase in an estimated error of the position of the rotor, a voltage saturation control means 20 compares the ratio (voltage saturation rate) at which the peak of a voltage to be applied to each of the three phases of the brushless motor 3 determined by the PWM signal generation means 9 exceeds the DC voltage outputted from the dc power supply 1 detected by the inverter applied voltage detection means 16 with a predetermined constant voltage saturation rate setting value, and only when the voltage saturation rate is not less than the voltage saturation rate setting value, it carries out a protective controlling operation to reduce the rotation speed target value externally applied until the voltage saturation rate becomes smaller than the voltage saturation rate setting value.

The driving controlling operation of the brushless motor 3 is carried out by using the above-mentioned circuit structure.

Patent Document 1: Japanese Patent Application Laid-Open No. 2000-350489

## DISCLOSURE OF THE INVENTION

In the above-mentioned conventional position sensor-less sine wave driving operation by using an estimated induced voltage, however, at least two detectors such as current sensors have to be used so as to detect phase currents of an electric motor to be driven, causing high costs upon constituting the driving device. Moreover, in order to use a brushless motor of this type as a compressor electric motor, there have been demands for superior driving performances covering from a low-speed rotation range to a high-speed rotation range and an expansion of the high-speed rotation range.

The present invention has been devised so as to solve the above-mentioned problems, and its objective is to provide an electric motor driving device which can detect phase currents accurately by using an inexpensive structure, and expand the high-speed rotation range so that superior driving operations are achieved in a wide range from a low-speed rotation range to a high-speed rotation range.

In order to solve the above-mentioned problems, the invention disclosed in claim 1 relates to an electric motor driving device that includes:

an inverter that drives an electric motor having three phases;
electric current detection means for detecting an inverter input current, and for determining an electric current of each phase based upon the detected current and duty information obtained from a duty correction means, which will be described later;
induced voltage estimating means for estimating an induced voltage of the electric motor based upon the input voltage to the inverter and the electric current from each phase;
rotor positional speed detection means for estimating the rotor magnetic pole position and rotation speed of the electric motor based upon the estimated induced voltage value;
phase-angle setting means for setting a current phase angle of the electric motor based upon the estimated rotor magnetic pole position and a predetermined phase angle;
PWM signal generation means for generating a PWM signal that controls the inverter based upon the information of the current phase angle;
duty correction means for correcting duty of the PWM signal generated by the PWM signal generation means;
first voltage saturation control means (20) for calculating a voltage saturation rate that corresponds to the degree of voltage saturation from the output of the dc voltage detection means and a voltage instruction value to be applied to the electric motor so that, when the voltage saturation rate is greater than a predetermined voltage saturation rate setting value A, a rotation-speed target value that is externally given is reduced until the voltage saturation rate has become smaller than the voltage saturation rate setting value A; and
second voltage saturation control means (21) for calculating a voltage saturation rate that corresponds to the degree of voltage saturation from the input voltage to the inverter and a voltage instruction value to be applied to the electric motor so that, when the voltage saturation rate is not less than a voltage saturation rate setting value B (<A), an instruction for advancing the current phase angle is given to the phase angle setting means until the voltage saturation rate has become smaller than the voltage saturation rate setting value B.

In the invention disclosed in claim 1, an input current is detected from one of inverter bus current (input current) lines, and based upon the input current, respective phase currents of a three-phase electric motor are calculated from the input current; therefore, an inexpensive system can be achieved.

The estimated magnetic pole position of the rotor is accurately determined by the functions of the first voltage saturation control means (20), and the high-speed rotation range can be expanded by the functions of the second voltage saturation control means (21).

## BRIEF DESCRIPTION OF THE DRAWINGS

FIG. 1 is a block diagram that shows a structure of an embodiment of the present invention.
FIG. 2 is a drawing that shows one example of a time-based change in a phase current state of an electric motor.
FIG. 3 is a drawing that shows one example of a change in a PWM signal.
FIG. 4 is a drawing that shows a state of a current flowing through the electric motor and an inverter at the time of a change in the PWM signal in FIG. 3.
FIG. 5 is a drawing that shows another example of a change in a PWM signal.
FIG. 6 is a drawing that shows a state of a current flowing through the electric motor and an inverter at the time of a change in the PWM signal in FIG. 5.

FIG. 7 is a drawing that shows still another example of a change in a PWM signal.
FIG. 8 is a block diagram that shows a conventional electric motor driving device.

BEST MODE FOR CARRYING OUT THE INVENTION

Referring to Figures, the following description will discuss an embodiment of the present invention.

(Embodiment 1)

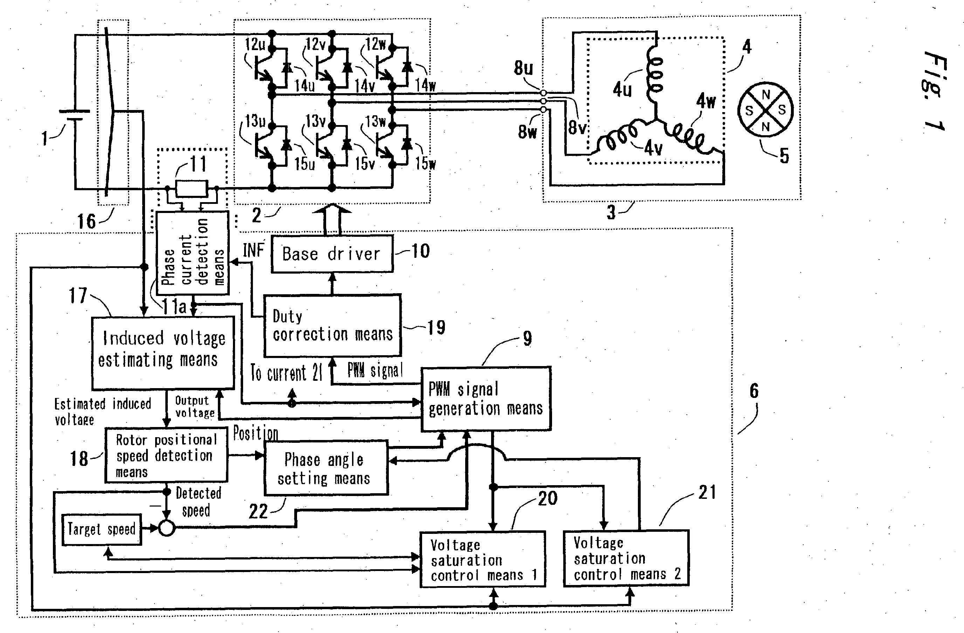

FIG 1 is a block diagram that shows a structure of the present embodiment. Reference numeral 1 represents a dc power supply, 2 is an inverter, 3 is a brushless motor, 4 is a stator, 5 is a rotor and 6 is a control unit.
The brushless motor 3 is provided with a stator 4 to which three phase windings 4u, 4v and 4w, which are Y-connected centered on a neutral point, are attached, and a rotor 5 to which a magnet is attached. A U-phase terminal 8u is connected to a non-connection end of the U-phase winding 4u, a V-phase terminal 8v is connected to a non-connection end of the V-phase winding 4v, and a W-phase terminal 8w is connected to a non-connection end of the W-phase winding 4w.
The inverter 2 is provided with three series circuits, each having a pair of switching elements series-connected in association with the upstream side and the downstream side of electric current, which are used for U-phase, V-phase and W-phase. A dc voltage, outputted from the dc power supply 1, is applied to these series circuits. The series circuit for the U-phase is constituted by a switching element 12u on the upstream side and a switching element 13u on the downstream side. The series circuit for the V-phase is constituted by a switching element 12v on the upstream side and a switching element 13v on the downstream side. The series circuit for the W-phase is constituted by a switching element 12w on the upstream side and a switching element 13w on the downstream side. Here, freewheel diodes 14u, 14v, 14w, 15u, 15v, 15w are connected in parallel with the respective switching elements.
The terminals 8u, 8v and 8w of the brushless motor 3 are respectively connected to the mutual connection of the switching elements 12u and 13u, the mutual connection of the switching elements 12v and 13v and the mutual connection of the switching elements 12w and 13w in the inverter 2.
A dc voltage, applied to the inverter 2, is converted to a three-phase ac voltage through the circuits such as the switching elements inside the inverter 2, and the brushless motor 3 is driven by the three-phase ac voltage.
In order to output an output voltage calculated from an error from the current speed so as to achieve a target speed that is externally given, a PWM signal used for driving the switching elements of the inverter 2 is generated by a PWM signal generation means 9. After having been corrected by a duty correction means 19, the PWM signal is converted to a driving signal used for electrically driving the switching elements by a base driver 10, and the respective switching elements 12u, 12v, 12w, 13u, 13v and 13w are consequently operated.
The following description will briefly discuss operations of the control unit 6. Based upon a phase current of the brushless motor 3 detected by a current detection means 11 placed on an inverter bus, an output voltage calculated by the PWM signal generation means 9 and a dc voltage outputted from the dc current supply 1 and detected by an inverter apply voltage detection means 16, an induced voltage of the brushless motor 3 is estimated by an induced voltage estimating means 17. Moreover, based upon the estimated induced voltage, a rotor positional speed estimating means 18 estimates the magnetic pole position and speed of the rotor of the brushless motor 3. Based upon information of the rotor magnetic pole position thus estimated, a voltage to be applied to each of the phases so as to drive the brushless motor 3 is determined by the PWM signal generation means 9 so that a PWM signal is generated based upon the determined voltage. Based upon the speed of the rotor 5 thus estimated and information such as a deviation from a target speed externally given, the rotor speed is controlled to attain the target speed.
The following description will discuss operations of the induced voltage estimating means 17. Phase currents (iu, iv, iw) flowing through the windings of the respective phases detected by a current detection means 11 are obtained. Moreover, based upon information of output voltages calculated by the PWM signal generation means 9 and inverter applied voltages detected by the inverter applied voltage detection means 16, phase voltages (vu, vv, vw) to be applied to the windings of the respective phases are found. In principle, based upon these values, induced voltage values eu, ev, and ew to be induced in the windings of the respective phases are found through calculations from the following equations (1), (2) and (3). Here, R represents resistance and L represents inductance. Moreover, d(iu)/dt, d(iv)/dt, d(iw)/dt are respectively time-based differential values of iu, iv and iw.

$$eu = vu - R \cdot iu - L \cdot d(iu)/dt \qquad \ldots (1)$$

$$ev = vv - R \cdot iv - L \cdot d(iv)/dt \qquad \ldots (2)$$

$$ew = vw - R \cdot iw - L \cdot d(iw)/dt \qquad \ldots (3)$$

When equations (1), (2) and (3) are expanded in more detail, equations (4), (5) and (6) are obtained.

$$
\begin{aligned}
eu = \ & vu \\
& - R \cdot iu \\
& - (la + La) \cdot d(iu)/dt \\
& - Las \cdot \cos(2\theta m) \cdot d(iu)/dt \\
& - Las \cdot iu \cdot d\{\cos(2\theta m)\}/dt \\
& + 0.5 \cdot La \cdot d(iv)/dt
\end{aligned}
$$

$$
\begin{aligned}
& - Las \cdot \cos(2\theta m - 120°) \cdot d(iv)/dt \\
& - Las \cdot iv \cdot d\{\cos(2\theta m - 120°)\}/dt \\
& + 0.5 \cdot La \cdot d(iw)/dt \\
& - Las \cdot \cos(2\theta m + 120°) \cdot d(iw)/dt \\
& - Las \cdot iw \cdot d\{\cos(2\theta m + 120°)\}/dt \qquad \ldots (4)
\end{aligned}
$$

$$ev = vv$$

$$- R \cdot iv$$

$$- (la + La) \cdot d(iv)/dt$$

$$- Las \cdot \cos(2\theta m + 120°) \cdot d(iv)/dt$$

$$- Las \cdot iv \cdot d\{\cos(2\theta m + 120°)\}/dt$$

$$+ 0.5 \cdot La \cdot d(iw)/dt$$

$$- Las \cdot \cos(2\theta m \cdot d(iw)/dt$$

$$- Las \cdot iw \cdot d\{\cos(2\theta m)\}/dt$$

$$+ 0.5 \cdot La \cdot d(iu)/dt$$

$$- Las \cdot \cos(2\theta m - 120°) \cdot d(iu)/dt$$

$$- Las \cdot iu \cdot d\{\cos(2\theta m - 120°)\}/dt \quad \ldots(5)$$

$$ew = vw$$

$$- R \cdot iw$$

$$- (la + La) \cdot d(iw)/dt$$

$$- Las \cdot \cos(2\theta m - 120°) \cdot d(iw)/dt$$

$$- Las \cdot iw \cdot d\{\cos(2\theta m - 120°)\}/dt$$

$$+ 0.5 \cdot La \cdot d(iu)/dt$$

$$- Las \cdot \cos(2\theta m + 120°) \cdot d(iu)/dt$$

$$- Las \cdot iu \cdot d\{\cos(2\theta m + 120°)\}/dt$$

$$+ 0.5 \cdot La \cdot d(iv)/dt$$

$$- Las \cdot \cos(2\theta m) \cdot d(iv)/dt$$

$$- Las \cdot iv \cdot d\{\cos(2\theta m)\}/dt \quad \ldots(6)$$

Here, d/dt represents a time differential operator, and with respect to dθ/dt that appears upon calculation of a differential value on trigonometric function, an operator obtained by converting an estimated velocity ωm to an electric angular velocity is used. Moreover, d(iu)/dt, d(iv)/dt and d(iw)/dt are found through linear Eulerian approximation. As shown in equation (14), the w-phase current value iw is defined as a value obtained by changing the symbol of the sum of a u-phase current value iu and a v-phase current value iv. Here, R represents a resistance value per one phase of the windings, la represents a leak inductance value per one phase of the windings, La represents an average value of effective inductances per one phase of the windings, and Las represents an amplitude of an effective inductance value per one phase of the windings.

In the induced voltage estimating means 17, equations (7), (8) and (9) obtained by simplifying equations (4), (5) and (6) are used. The simplifying processes are carried out as follows: supposing that phase current values iu, iv and iw are sine waves, phase currents iu, iv and iw are formed by a current instruction amplitude ia and a current instruction phase βT so as be simplified.

$$eu = vu$$
$$+ R \cdot ia \cdot \sin(\theta m + \beta T)$$
$$+ 1.5 \cdot (la + La) \cdot \cos(\theta m + \beta T)$$
$$- 1.5 \cdot Las \cdot \cos(\theta m - \beta T) \qquad \ldots (7)$$

$$ev = vv$$
$$+ R \cdot ia \cdot \sin(\theta m + \beta T - 120°)$$
$$+ 1.5 \cdot (la + La) \cdot \cos(\theta m + \beta T - 120°)$$
$$- 1.5 \cdot Las \cdot \cos(\theta m - \beta T - 120°) \qquad \ldots (8)$$

$$ew = vw$$
$$+ R \cdot ia \cdot \sin(\theta m + \beta T - 240°)$$
$$+ 1.5 \cdot (la + La) \cdot \cos(\theta m + \beta T - 240°)$$
$$- 1.5 \cdot Las \cdot \cos(\theta m - \beta T - 240°) \qquad \ldots (9)$$

Next, the following description will discuss operations of the rotor positional velocity estimating means 18. Based upon estimated induced voltage values eu, ev and ew obtained from the induced voltage estimating means 17, the position and velocity of the rotor 5 are estimated. In this process, by correcting the estimated angle θm recognized by the rotor positional velocity estimating means 18 using an error in the induced voltage, the estimated value is converged to a true value. Moreover, the estimated velocity ωm is formed based upon the estimated angle.

First, induced voltage reference values (eum, evm, ewm) of the respective phases are found from the following equations:

$$eum = em \cdot \sin(\theta m + \beta T)$$
$$evm = em \cdot \sin(\theta m + \beta T - 120°)$$
$$ewm = em \cdot \sin(\theta m + \beta T - 240°) \qquad \ldots (10)$$

In this case, em, that is, the induced voltage amplitude value, is found as a value that corresponds to the amplitude value of the estimated induced voltage eu, ev and ew.

The deviation ε between the induced voltage reference value and the induced voltage estimated value found in this manner is formed. As indicated by the following equation (11), the deviation ε is obtained by subtracting the induced voltage reference value esm from the induced voltage estimated value es.

$$\varepsilon = es - esm \quad \ldots (11)$$

(s:phase u/v/w)

In the case when this deviation becomes 0, since the estimated angleθm is set to a true value, the estimated angle θm is subjected to a proportional integrating operation so as to set the deviation ε to 0, and the corrected value is transmitted to the PWM signal generation means 9.

By calculating the varied value of the estimated angle θm in the rotor positional velocity estimating means 18, the estimated velocity ω is formed, and in order to achieve the target velocity ω*, based upon a difference Δω between the target velocity ω* and the estimated velocity ωm, a corrected value is obtained from the following equation (12), and transmitted to the PWM signal generation means 9.

$$KP\Delta\omega + KI\Delta\omega \quad \ldots (12)$$

(KP: proportional gain, KI: integral gain)

Based upon the corrected value, the PWM signal generation means 9 calculates a voltage V* to be outputted, and from the voltage value V*, the voltage Vs* (s: phase u/v/w) to be outputted to the respective phases is found from the following equations:

$$Vu^* = V^* \cdot \sin(\theta m + \beta T)$$

$$Vv^* = V^* \cdot \sin(\theta m + \beta T - 120°)$$

$$Vw^* = V^* \cdot \sin(\theta m + \beta T - 240°) \quad \ldots (13)$$

Moreover, the PWM signal of each of the switching elements 12u, 12v, 12w, 13u, 13v, 13w to be used for outputting the voltage Vs* (s: phase u/v/w) thus obtained is corrected by a duty correction means 19, and after having been outputted to a base driver 10, the respective switching elements 12u, 12v, 12w, 13u, 13v, 13w are driven to generate an ac current having a sine wave.

As described above, the present embodiment forms an estimated angle θm by using the deviation ε between the estimated induced voltage value and the induced voltage reference value, and allows a phase current having a sine wave to flow so that a sine-wave driving operation of a brushless motor 3 is achieved.

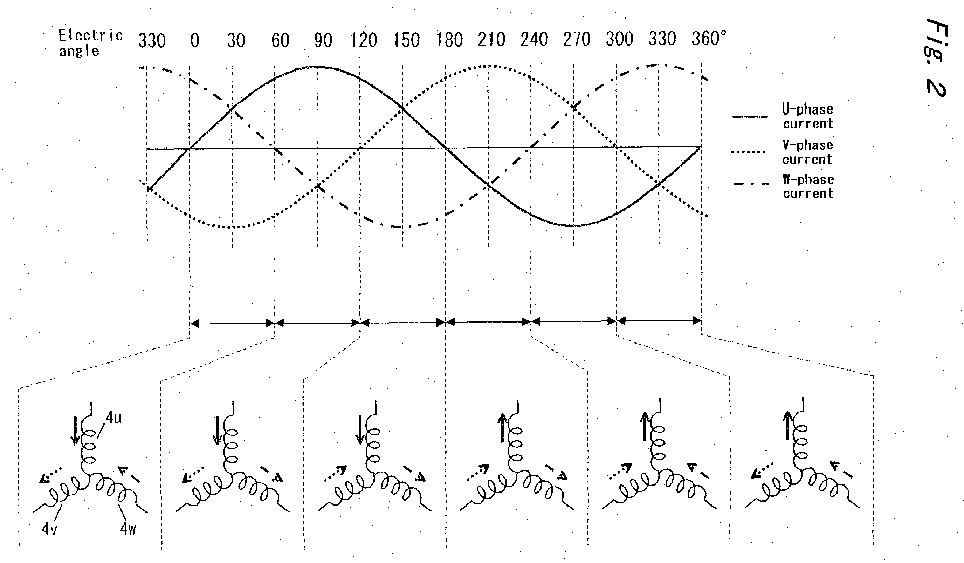

Prior to explaining operations of the duty correction means 19, the following description will explain states in which phase currents of the brushless motor 3 appear in electric currents flowing through the inverter bus, with reference to FIGS. 2 to 6.

FIG. 2 is a graph that shows states of phase currents flowing through windings of the respective phases of the brushless motor 3 in each of sections of the electric angle. In the section of electric angles from 0 to 60°, currents flow through the U-phase winding 4u and W-phase winding 4w from the non-connection ends toward the neutral point and a current flows through the V-phase winding 4v from the neutral point toward the non-connection end. In the section of electric angles from 60 to 120°, a current flows through the U-phase winding 4u from the non-connection end toward the neutral point and currents flow through the V-phase winding 4v and W-phase winding 4w from the neutral point toward the non-connection ends. FIG. 2 shows the states of the phase currents that flow through the windings of the respective phases thereafter for every electric angles of 60°.

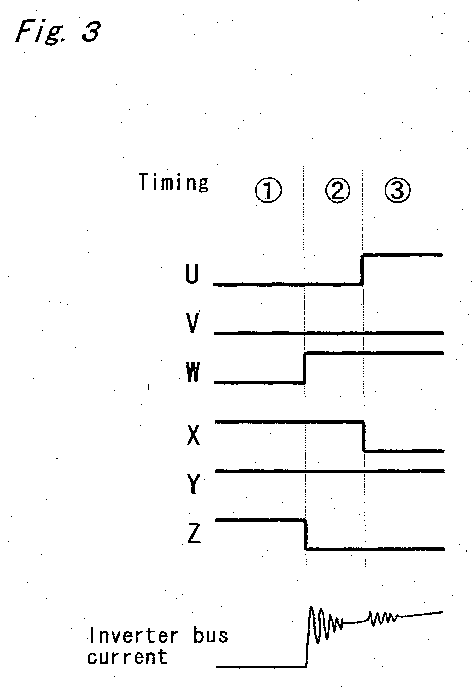

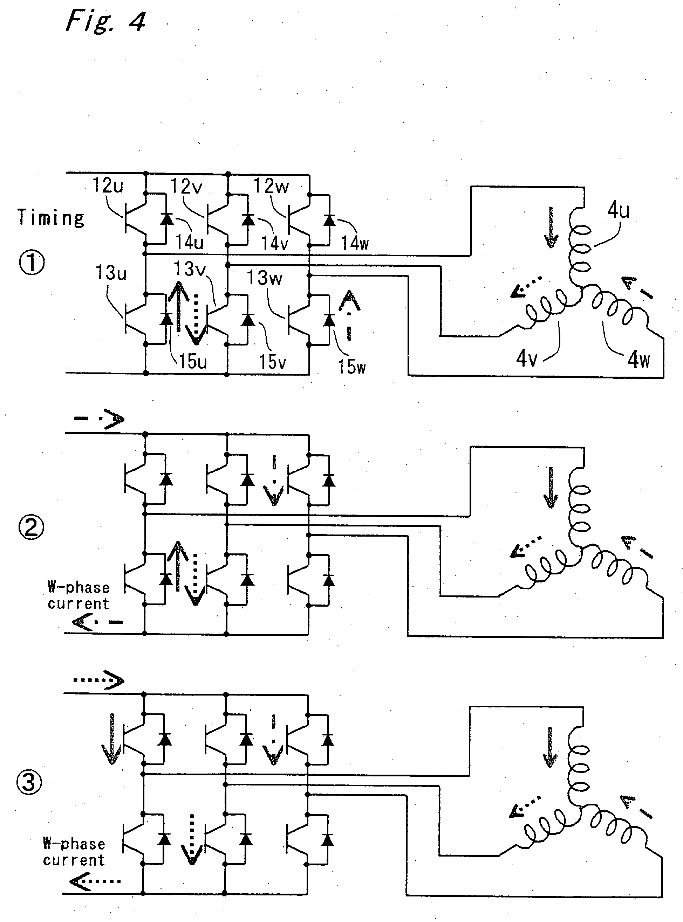

For example, in the case when PWM signals, generated by the PWM signal generation means 9 at the time of an electric angle of 30° in FIG. 2, change as shown in FIG. 3 (U represents a signal used for operating switching element 12u, V represents a signal used for operating switching element 12v, W represents a signal used for operating switching element 12w, X represents a signal used for operating switching element 13u, Y represents a signal used for operating switching element 13v and Z represents a signal used for operating switching element 13w, and these are described as active Hi), as shown in FIG. 4, no current appears in the timing (1), a current flowing through the W-phase winding 4w appears in the timing (2) and a current flowing through the V-phase winding 4v appears in the timing (3), on the inverter bus.

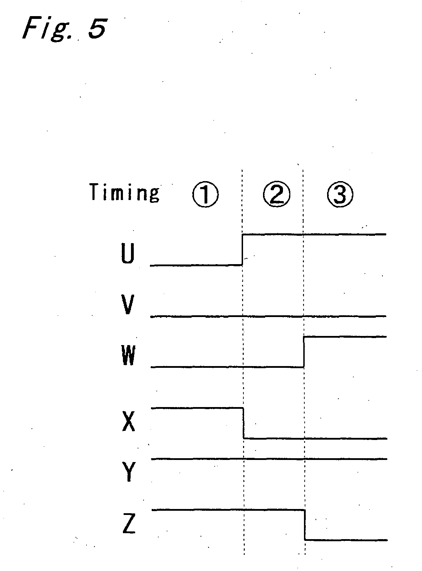

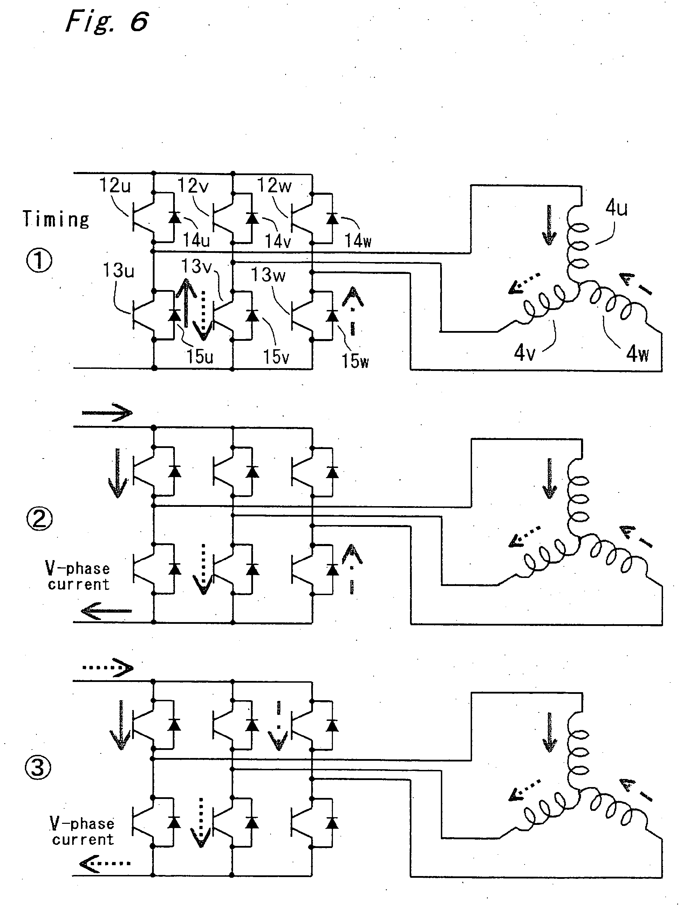

In addition, in the case when PWM signals, generated by the PWM signal generation means 9 at the time of an electric angle of 30° in FIG. 2, change as shown in FIG. 5, no current appears in the timing (1), a current flowing through the U-phase winding 4u appears in the timing (2) and a current flowing through the V-phase winding 4v appears in the timing (3), on the inverter bus, as shown in FIG. 6.

In this manner, depending on the states of the switching elements 12u, 12v, 12w, 13u, 13v, 13w of the inverter 2, phase currents of the brushless motor 3 appear on the inverter bus.

When the currents corresponding to two phases are determined in the close timings as described above, the current of the other one phase is found from the following equation:

$$iu + iv + iw = 0 \qquad \dots (14)$$

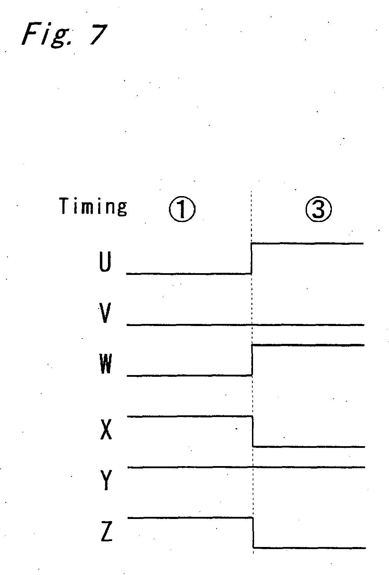

However, in the case when PWM signals, generated by the PWM signal generation means 9 at the time of an electric angle of 30° in FIG. 2, change in such a manner that, as shown in FIG. 7, a rise and a fall between the signals of the U-phase and W-phase take place virtually simultaneously, no current appears in the timing (1), and only the current flowing through the V-phase winding 4v appears in the timing (3) on the inverter bus. If the PWM signals having such changes are repeated, it becomes impossible to find the respective currents of the three phases, failing to estimate the induced voltage in the induced voltage estimating means 17, as well as making it unable to drive the brushless motor 3.

In order to avoid the above-mentioned problems, the duty correction means 19 monitors the PWM signals generated by the PWM signal generation means 9, and should it be no time difference between the rise and fall portions of the signals of the respective UVW phases, as shown in FIG. 7, it corrects the duty so as not to allow the time difference between the rise and fall portions of the signals of the respective UVW phases to become 5 micro-seconds or less, as shown in FIG.3. More specifically, the on-timing of the U-phase is delayed, while the on-timing of the W-phase is advanced.

In this manner, the duty information of the PWM signals outputted from the duty correction means 19 is inputted to the current detection means 11, and the current detection means 11 carries out conversions to the respective currents of the three phases, while determining which phase current of the brushless motor 3 is appearing as the inverter bus current; thus, the resulting currents are utilized in the succeeding estimated calculations of the induced voltage in the induced voltage estimating means 17.

In order to prevent the voltage to be applied to the brushless motor 3 from being distorted from the sine wave and causing the subsequent increase in an estimated error of the position of the rotor, a voltage saturation control means 20 compares the rate (voltage saturation rate) at which the peak of a voltage to be applied to each of the three phases of the brushless motor 3 determined by the PWM signal generation means 9 exceeds the DC voltage outputted from the dc power supply 1 detected by the inverter applied voltage detection means 16 with a voltage saturation rate setting value A, and only when the voltage saturation rate is not less than the voltage saturation rate setting value A, it carries out a protective controlling operation to reduce the rotation speed target value externally applied until the voltage saturation rate becomes smaller than the voltage saturation rate setting value A.

The voltage saturation control means 21 compares the above-mentioned voltage saturation rate with a voltage saturation rate setting value B (<A) that is preliminarily set to a value smaller than the voltage saturation rate setting value A, and only when the voltage saturation rate is not less than the voltage saturation rate setting value B, it carries out a so-called magnetic field weakening control, that is, a control operation which increases the current instruction phase βT by using a phase angle setting means 22 until the voltage saturation rate becomes smaller than the voltage saturation rate setting value B, so that it becomes possible to expand the high-speed rotation range.

Only in the cases when the rotation speed of the brushless motor 3, estimated by the rotor positional speed estimating means 18, is greater than the predetermined value, when the phase currents (iu, iv, iw) flowing through each of the windings of the respective phases detected by the current detection means 11 is smaller than the predetermined value and when the rotation speed target value of the electric motor is greater than the predetermined value, it is determined that no loss of synchronism occurs even when the load of the brushless motor 3 becomes lighter to make the estimated error of the rotor position greater, and switching may be made to make the function of the voltage saturation control means 21 effective.

As described above, the phase current flowing through each of the windings of the respective phases of the brushless motor 3 is detected by using the current detection means 11 for detecting an inverter bus current and the duty correction means 19, and by altering the current instruction phase βT using the phase angle setting means in response to the voltage saturation rate of the voltage to be applied to each of the phases of the brushless motor 3, the high-speed rotation range can be expanded.

INDUSTRIAL APPLICABILITY

The present invention is applicable to various devices in which a brushless motor is used as a power source.

**Claims**

1. An electric motor driving device comprising:

an inverter that drives an electric motor having three phases;
electric current detection means for detecting an inverter input current, and for determining an electric current of each phase based upon the detected current and duty information obtained from a duty correction means, which will be described later;
induced voltage estimating means for estimating an induced voltage of the electric motor based upon the input voltage to the inverter and the electric current from each phase;
rotor positional speed detection means for estimating the rotor magnetic pole position and rotation speed of the electric motor based upon the estimated induced voltage value;
phase-angle setting means for setting a current phase angle of the electric motor based upon the estimated rotor magnetic pole position and a predetermined phase angle;
PWM signal generation means for generating a PWM signal that controls the inverter based upon the information of the current phase angle;
duty correction means for correcting duty of the PWM signal generated by the PWM signal generation means;
first voltage saturation control means for calculating a voltage saturation rate that corresponds to the degree of voltage saturation from the output of the dc voltage detection means and a voltage instruction value to be applied to the electric motor so that, when the voltage saturation rate is not less than a predetermined voltage saturation rate setting value A, a rotation-speed target value that is externally given is reduced until the voltage saturation rate becomes smaller than the voltage saturation rate setting value A; and
second voltage saturation control means for calculating a voltage saturation rate that corresponds to the degree of voltage saturation from the input voltage to the inverter and a voltage instruction value to be applied to the electric motor so that, when the voltage saturation rate is not less than a voltage saturation rate setting value B (<A), an instruction for advancing the current phase angle is given to the phase angle setting means until the voltage saturation rate becomes smaller than the voltage saturation rate setting value B.

2. The electric motor driving device according to claim 1, wherein only when the rotation speed of the electric motor, estimated by the rotor positional speed detection means, is not less than a predetermined value, the function of the second voltage saturation control means is made effective.

3. The electric motor driving device according to claim 1, wherein only when a current of each of the phases is not more than a predetermined value, the function of the second voltage saturation control means is made effective.

4. The electric motor driving device according to claim 1, wherein only when a rotation-speed target value of the electric motor is not less than a predetermined value, the function of the second voltage saturation control means is made effective.

5. An air conditioning apparatus comprising: the electric motor driving device according to any of claims 1 to 4.

*Fig. 1*

*Fig. 2*

Electric angle

U-phase current
V-phase current
W-phase current

330  0  30  60  90  120  150  180  210  240  270  300  330  360°

4u  4w  4v

*Fig. 3*

Timing ① ② ③

U

V

W

X

Y

Z

Inverter bus
current

# Fig. 4

*Fig. 5*

## Fig. 6

Timing ①

Timing ②

Timing ③

*Fig. 7*

*Fig. 8*

PRIOR ART

**INTERNATIONAL SEARCH REPORT**

| International application No. |
|---|
| PCT/JP2004/010274 |

**A. CLASSIFICATION OF SUBJECT MATTER**
Int.Cl⁷ H02P6/06, F04C29/10

According to International Patent Classification (IPC) or to both national classification and IPC

**B. FIELDS SEARCHED**

Minimum documentation searched (classification system followed by classification symbols)
Int.Cl⁷ H02P6/00-6/24

Documentation searched other than minimum documentation to the extent that such documents are included in the fields searched

| Jitsuyo Shinan Koho | 1922-1996 | Toroku Jitsuyo Shinan Koho | 1994-2004 |
|---|---|---|---|
| Kokai Jitsuyo Shinan Koho | 1971-2004 | Jitsuyo Shinan Toroku Koho | 1996-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2002-291284 A (Toshiba Carrier Corp.), 04 October, 2002 (04.10.02), Par. No. [0012]; Fig. 1 & WO 2002/078168 A1 | 1-5 |
| Y | JP 2002-112598 A (Matsushita Electric Industrial Co., Ltd.), 12 April, 2002 (12.04.02), Claim 3; Par. No. [0094] (Family: none) | 1-5 |
| A | JP 2000-350489 A (Matsushita Electric Industrial Co., Ltd.), 15 December, 2000 (15.12.00), Claim 3 (Family: none) | 1-5 |

☐ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 August, 2004 (02.08.04) | 17 August, 2004 (17.08.04) |

| Name and mailing address of the ISA/ Japanese Patent Office | Authorized officer |
|---|---|
| Facsimile No. | Telephone No. |

Form PCT/ISA/210 (second sheet) (January 2004)